# EUROPEAN PATENT APPLICATION

(11) **EP 2 849 153 A1**
(43) Date of publication of application: **18.03.2015**
(21) Application number: 14183461.4
(22) Date of filing: 03.09.2014
(51) Int. Cl.: G06T 11/60

(54) **Method, device and terminal for displaying a desktop**

(30) Priority: 13.09.2013 CN 201310419166
(71) Applicant: Xiaomi Inc., Beijing 100085 (CN)
(72) Inventor: Ren, Tian, Beijing (CN); Zhao, Jiankai, Beijing (CN); Yu, Yang, Beijing (CN); Chen, Zhonghui, Beijing (CN); Li, Xiaoyin, Beijing (CN)
(74) Representative: Hanna, Peter William Derek

(57) **Abstract**

The present disclosure discloses a method, a device and a terminal for displaying a desktop, which belongs to the field of mobile terminal technology. The method includes: acquiring (101) current weather information; acquiring (102) a theme file corresponding to the current weather information from a pre-downloaded theme package, according to the acquired current weather information, the theme file including at least a desktop background file and an icon file; and rendering (103) the desktop background file and the icon file onto a desktop. In the present disclosure, by acquiring a theme file corresponding to current weather information, and rendering the acquired theme file onto a desktop, a desktop background and a display effect of an icon on the desktop corresponds to the current weather information, thereby a user may intuitively and quickly know the current weather information without carefully viewing text information.

## Description

### CROSS-REFERENCE TO RELATED APPLICATION

This application is based upon and claims priority to Chinese Patent Application NO. 201310419166.2, filed on September 13, 2013.

### TECHNICAL FIELD

The present disclosure relates to the field of mobile terminal technology, and more particularly, to a method, a device and a terminal for displaying a desktop.

### BACKGROUND

With the development of information technology, people's demands for terminals have become more personalized. In order to meet the personalized needs of different users, terminals may provide some dynamic images that may display special effects as desktops on the terminals. Since servers provides a variety of dynamic images, the users of terminals may use a personalized desktop they have selected to express their moods, current weather or to suit their personal preferences.

In implementing the present disclosure, the inventors have found at least the following problems.

If a dynamic image is used as a desktop, its display form is monotonous. If the dynamic image is used to reflect weather information, the weather information needs to be displayed in accordance with a server's push, while the dynamic image is not updated in a timely manner. Since the dynamic image may be covered by a desktop icon, once the icon is located at some key information, a user may not intuitively and quickly know current weather information.

### SUMMARY

In order to solve the above technical problems, embodiments of the present disclosure provide a method, a device and a terminal for displaying desktop, in accordance with claims which follow. The technical solutions are as follows.

According to a first aspect of the embodiments of the present disclosure, there is provided a computer-implemented method for displaying a desktop, comprising:
acquiring current weather information;
acquiring a theme file corresponding to the current weather information from a pre-downloaded theme package, according to the acquired current weather information, the theme file including at least a desktop background file and an icon file; and
rendering the desktop background file and the icon file onto a desktop of a terminal.

In one embodiment, the step of acquiring the current weather information comprises:
acquiring, according to a geographical location preset by the terminal, weather information corresponding to the geographical location; or,
acquiring, according to a geographical location where the terminal is currently located, weather information corresponding to the geographical location.

In one embodiment, the desktop background file includes a plurality of resources and moving trajectories and display effects of the resources, and the step of rendering the desktop background file and the icon file onto the desktop comprises:
rendering the desktop of the terminal, in accordance with the plurality of resources and the moving trajectories and the display effects of the resources, such that the resources represent the display effects and move according to the moving trajectories on the desktop.

In one embodiment, the icon file includes an icon file in an inactive state and an icon file in an active state, and the step of rendering the desktop background file and the icon file onto the desktop comprises:
rendering the icon file in the inactive state onto the desktop, when the icon is in an inactive state; or,
withdrawing a rendering effect of the icon file in the inactive state, rendering the icon file in the active state onto the desktop, and starting an application corresponding to the icon, when an instruction to activate an inactive icon is detected.

In one embodiment, the icon file further includes an icon file of a preset operation, and the step of rendering the desktop background file and the icon file onto the desktop comprises:
withdrawing the rendering effect of the icon file in the inactive state, and rendering the icon file of the preset operation onto the desktop, when the preset operation is detected.

In one embodiment, the preset operation is an operation of shaking, an operation of double-clicking a blank area on a screen or an operation of blowing.

According to a second aspect of the embodiments of the present disclosure, there is provided a device for displaying a desktop, comprising:
a weather information acquiring module configured to acquire current weather information;
a theme file acquiring module configured to acquire a theme file corresponding to the current weather information from a pre-downloaded subject package, according to the acquired current weather information, the theme file including at least a desktop background file and an icon file; and
a rendering module configured to render the desktop background file and the icon file onto a desktop of a terminal.

In one embodiment, the weather information acquiring module comprises:
a first weather information acquisition submodule configured to acquire, according to a geographical location preset by the terminal, weather information corresponding to the geographical location; or,
a second weather information acquisition submodule configured to acquire, according to a geographical location where the terminal is currently located, weather information corresponding to the geographical location.

In one embodiment, the desktop background file includes a plurality of resources and moving trajectories and display resources of the resources, and the rendering module is configured to render the desktop of the terminal, in accordance with the plurality of resources and the moving trajectories and the display effects of the resources, such that the resources represent the display effects and move according to the moving trajectories on the desktop.

In one embodiment, the icon file includes an icon file in an inactive state and an icon file in an active state, and the rendering module comprises:
an inactive state rendering submodule configured to render the icon file in the inactive state onto the desktop, when the icon is in an inactive state; or,
an active state rendering submodule configured to withdraw a rendering effect of the icon file in the inactive state, render the icon file in the active state onto the desktop, and start an application corresponding to the icon, when an instruction to activate an inactive icon is detected.

In one embodiment, the icon file further includes an icon file of a preset operation, and the rendering module is further configured to withdraw the rendering effect of the icon file in the inactive state, and render the icon file of the preset operation onto the desktop, when the preset operation is detected.

In one embodiment, the preset operation is an operation of shaking, an operation of double-clicking a blank area on a screen or an operation of blowing.

According to a third aspect of the embodiments of the present disclosure, there is provided a terminal comprising a memory, a processor, a display and one or more programs, wherein the one or more programs are stored in the memory and are configured to be executed by one or more processors, the one or more programs comprise instructions for performing operations to:
acquire current weather information;
acquire a theme file corresponding to the current weather information from a pre-downloaded theme package, according to the acquired current weather information, the theme file including at least a desktop background file and an icon file; and
render the desktop background file and the icon file onto a desktop of the terminal.

According to a fourth aspect of the embodiments of the present disclosure, there is provided a program product having stored therein instructions that, when executed by one or more processors of the terminal apparatus as above, causes the terminal apparatus to perform:
acquire current weather information;
acquire a theme file corresponding to the current weather information from a pre-downloaded theme package, according to the acquired current weather information, the theme file comprising at least a desktop background file and an icon file; and
render the desktop background file and the icon file onto a desktop of the terminal.

The technical solutions provided by the embodiments of the present disclosure may include the following advantageous effects.

By acquiring a theme file corresponding to current weather information, and rendering the acquired theme file onto a desktop, the desktop background and the display effect of the icon on the desktop may correspond to the current weather information, thereby a user may intuitively and quickly know the current weather information without carefully viewing text information.

### BRIEF DESCRIPTION OF THE DRAWINGS

The accompanying drawings, which are hereby incorporated in and constitute a part of this specification, illustrate embodiments consistent with the invention and, together with the description, serve to explain the principles of the invention.

In order to more clearly explain the technical solutions in the embodiments of the present disclosure, a simple introduction to the drawings required for describing the embodiments will be given below.
Fig. 1 is a flow chart showing a method for displaying a desktop, according to an embodiment of the present disclosure.
Fig. 2 is a flow chart showing a method for displaying a desktop, according to an embodiment of the present disclosure.
Fig. 3 is a diagram illustrating a desktop display, according to an embodiment of the present disclosure.
Fig. 4 is a diagram illustrating a desktop display, according to an embodiment of the present disclosure.
Fig. 5 is a block diagram illustrating a device for display a desktop, according to an embodiment of the present disclosure.
Fig. 6 is a block diagram illustrating a terminal, according to an embodiment of the present disclosure.

### DETAILED DESCRIPTION

In order to make purposes, technical solutions and advantages of the present disclosure more clear, hereinafter, the embodiments of the present disclosure will be further described in detail in conjunction with the drawings.

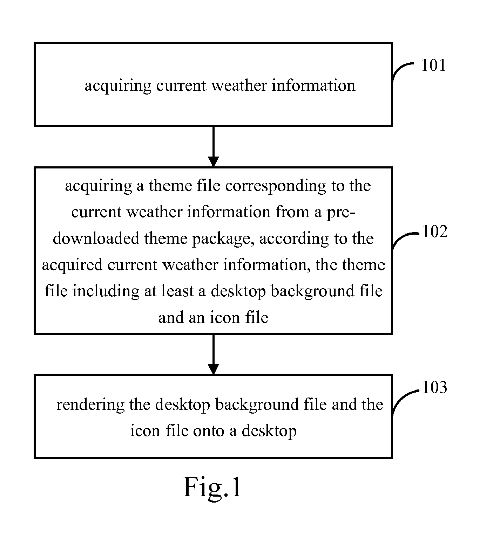

Fig. 1 is a flow chart of a method for displaying a desktop provided by an embodiment of the present disclosure. Referring to Fig. 1, the embodiment includes the following steps.

In step 101, current weather information is acquired.

In step 102, a theme file corresponding to the current weather information is acquired from a pre-downloaded theme package, according to the acquired current weather information, and the theme file includes at least a desktop background file and an icon file.

In step 103, the desktop background file and the icon file are rendered onto a desktop of a terminal.

In the method provided by the embodiment of the present disclosure, by acquiring a theme file corresponding to current weather information, and rendering the acquired theme file onto the desktop, a desktop background and the display effect of an icon on the desktop may correspond to the current weather information, thereby a user may intuitively and quickly know the current weather information without carefully viewing text information.

In one embodiment, the step of acquiring the current weather information comprises:
acquiring, according to a geographical location preset by the terminal, weather information corresponding to the geographical location; or,
acquiring, according to a geographical location where the terminal is currently located, weather information corresponding to the geographical location.

In one embodiment, the desktop background file includes a plurality of resources and moving trajectories and display effects of the resources, and the step of rendering the desktop background file and the icon file onto the desktop comprises:
rendering the desktop of the terminal, in accordance with the plurality of resources and the moving trajectories and the display effects of the resources, such that the resources represent the display effects and move according to the moving trajectories on the desktop.

In one embodiment, the icon file includes an icon file in an inactive state and an icon file in an active state, and the step of rendering the desktop background file and the icon file onto the desktop comprises:
rendering the icon file in the inactive state onto the desktop, when the icon is in an inactive state; or,
withdrawing a rendering effect of the icon file in the inactive state, rendering the icon file in the active state onto the desktop, and starting an application corresponding to the icon, when an instruction to activate an inactive icon is detected.

In one embodiment, the icon file further includes an icon file of a preset operation, and the step of rendering the desktop background file and the icon file onto the desktop comprises:
withdrawing the rendering effect of the icon file in the inactive state, and rendering the icon file of the preset operation onto the desktop, when the preset operation is detected.

In one embodiment, the preset operation is an operation of shaking, an operation of double-clicking a blank area on a screen or an operation of blowing.

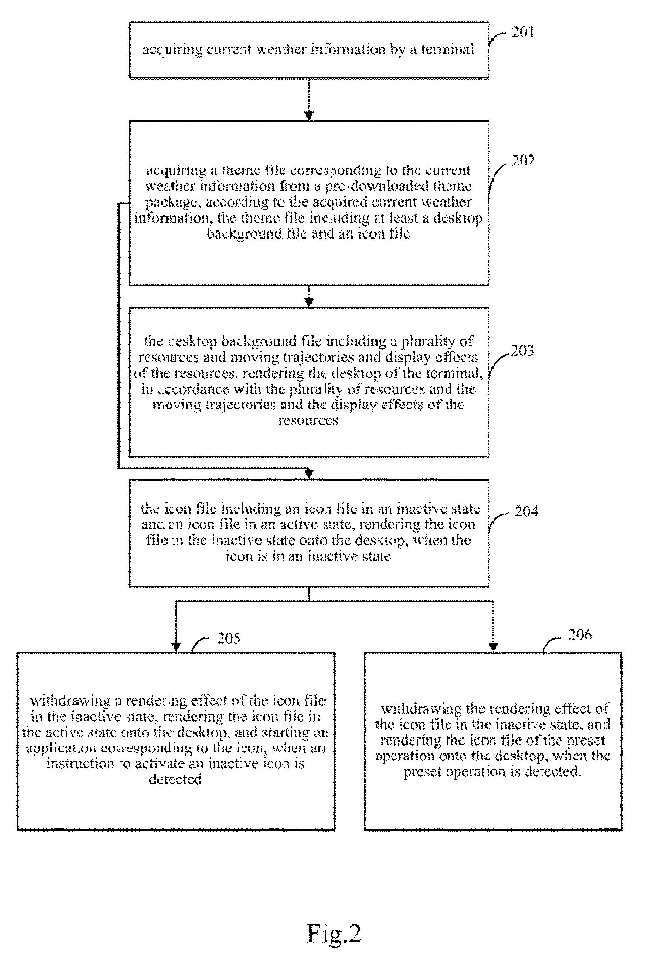

Fig. 2 is a flow chart of a method for displaying a desktop provided by an embodiment of the present disclosure. A main body for implementing the embodiment of the invention may be a terminal, or may further be a desktop launcher of the terminal, and the desktop launcher may represent a desktop background and a desktop icon according to a theme file for specifying a display effect of a desktop. Referring to Fig. 2, the embodiment includes the following steps.

In step 201, current weather information is acquired by the terminal.

The weather information includes temperature, humidity, atmospheric particle concentration, night and day, and the like, but it is not limited thereto. For example, the step 201 may include the following two possibilities: (1) according to a geographical location where the terminal is currently located, the weather information corresponding to the geographical location is acquired by the terminal. When the terminal presets that the weather information is acquired according to the geographical location where the terminal is currently located, the location where the terminal is currently located may be acquired by ways such as GPS positioning, so as to acquire the weather information according to the geographical location; (2) according to a geographical location preset by the terminal, weather information corresponding to the geographical location is acquired by the terminal. In order to provide choices for a user, the user of the terminal may also preset a geographical location on the terminal to acquire weather information, at this time, the preset geographical location is not necessarily the geographical location where the terminal is currently located, but may be a geographical location of a region concerned by the user of the terminal.

The weather information may be acquired by a weather server, and the weather server is configured to save the geographical location and the weather information corresponding to the geographical location. For example, its process may include: according to the geographical location determined by the terminal, the terminal sends an acquiring request to the weather server, where the acquiring request carries the geographical location. When the weather server receives the acquiring request, the server sends the weather information corresponding to the geographical location according to the acquiring request which carries the geographical location. When the terminal receives the weather information returned by the weather server, the terminal acquires the returned weather information as current weather information corresponding to the geographical location.

Preferably, the step 201 may be performed periodically, the terminal acquires current weather information corresponding to the geographical location at every preset period, to achieve the purpose that the current weather information acquired by the terminal is consistent with the actual weather information, thus guarantying accuracy of the current weather information. A length of the preset period may be preset by technical personnel, or may be adjusted by the user of the terminal.

In step 202, a theme file corresponding to the current weather information is acquired from a pre-downloaded theme package, according to the acquired current weather information, the theme file includes at least a desktop background file and an icon file.

In the embodiment of the present disclosure, the theme package includes a plurality of theme files corresponding to weather information, different weather information may correspond to different theme files. The theme package may be pre-downloaded from a server by the terminal and is saved in a file path of the terminal, which is not particularly defined in the present embodiment. In addition, the present embodiment does not particularly define when to download the theme package, it is only required that the theme package is in a downloaded state when the theme file corresponding to the current weather information is acquired.

The theme file includes at least a desktop background file and an icon file. The desktop background file is configured to render a desktop background, and the icon file is configured to render a desktop icon.

The desktop background file may be a XML (Extensible Markup Language) file, the XML file is configured to specify a rendering manner of the desktop background. The desktop background file may also be a GIF (Graphics Interchange Format) file, the GIF file may be a dynamic image associated with the weather information. The desktop background file may also be a file in another format. The icon file may be a XML (Extensible Markup Language) file, the XML file is configured to specify a rendering manner of an icon. The icon file may also be a GIF (Graphics Interchange Format) file, the GIF file may be a dynamic image associated with the weather information. The icon file may also be a file in another format. In step 203, the desktop background file includes a plurality of resources and moving trajectories and display effects of the resources, the desktop of the terminal is rendered, in accordance with the plurality of resources and the moving trajectories and the display effects of the resources, such that the resources represent the display effects and move according to the moving trajectories on the desktop.

The resources may include a desktop background picture and elements for representing weather, for example, for a rainy day, its corresponding elements may be oblique lines or raindrops that represent raining, and for a snowy day, its corresponding elements may be snowflakes. Of course, the above elements may be elements in various forms such as patterns, texts, icons etc.

The moving trajectories of the resources are configured to specify moving trajectories of the elements that represent weather, it is to be explained that, a moving trajectory corresponding to each element may be different so as to display variable effects. For example, a plurality of raindrops may be rendered in accordance with different moving trajectories. The display effects of the resources are configured to specify color and size to be displayed and the like. Furthermore, in the desktop background file, position coordinates of an icon on the current desktop may also be specified, if the icon is located on a moving trajectory of a resource, the moving trajectory of the resource is adjusted according to the position coordinates. For an example, for a raindrop, when a raindrop is covered by an icon on a moving trajectory of the raindrop, the raindrop is clairvoyant on the icon, or the raindrop on the moving trajectory on which the icon is located is made in an invisible state, for another example, when an raindrop is covered by an icon on a moving trajectory of the raindrop, a first contact point of the moving trajectory and the icon is used as an incident point, a fringe of the icon is used as a mirror surface, and a line perpendicular to the fringe of the icon is used as a axis, the initial moving trajectory is adjusted to a moving trajectory symmetrical relative to the incident trajectory, and the raindrop is rendered in accordance with the adjusted moving trajectory. There may be a variety of adjusting manners.

For example, for the desktop background, the desktop background file may include a GIF file and a plurality of elements that represent weather, the GIF file shows dynamic image effects, and the plurality of elements are displayed in combination with the GIF file according to specifications such as their moving trajectories, so as to show effects specified by the desktop background file. Or, the desktop background file includes a static desktop background picture and a plurality of elements that represent weather, the plurality of elements are rendered in accordance with their moving trajectories and display effects on the desktop background picture, so as to show effects specified by the desktop background file.

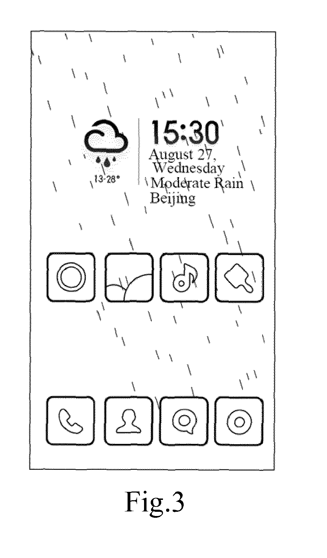

According to the resources and the moving trajectories and the display effects of the resources, dynamic effects may be generated. As shown in Fig. 3, when the current weather is a rainy day, the resources corresponding to the rainy day may include a gray desktop background picture and a plurality of oblique lines which differ in lengths to identify the rainy day, the desktop background file also specifies the moving trajectories that move the oblique lines downward, thus the desktop background file may be used to render the desktop with an effect that the raindrops continuously fall on a rainy day.

Of course, the desktop background file may also include display effects of elements in a desktop plug-in, for example, texts in weather Widget in Fig. 3 may be rendered according to the display effects in the desktop background file, so that the texts show required effects.

In step 204, the icon file includes an icon file in an inactive state and an icon file in an active file, the file icon in the inactive state is rendered onto the desktop, when the icon is in an inactive state.

In the embodiment of the present disclosure, the icon file includes the icon file in the inactive state, the icon file in the active file and an icon file of a preset operation, but it is not limited thereto, the icon file in the inactive state may be different from the icon file in the active file, that is, when the icon file is not activated, the icon file is rendered using the corresponding icon file, and when the icon file is activated, the icon file is rendered using an icon file having a different display effect, thereby representing influence of user intervention on the icon file. The preset operation includes an operation of shaking, an operation of double-clicking a blank area on a screen or an operation of blowing, but it is not limited thereto.

For example, the theme file may include a plurality of icon files corresponding to an icon, according to an icon existed on the current desktop, an icon file in an inactive state corresponding to the icon is acquired, and the icon file in the inactive state is rendered onto the desktop, such that a user may intuitively and quickly know current weather information.

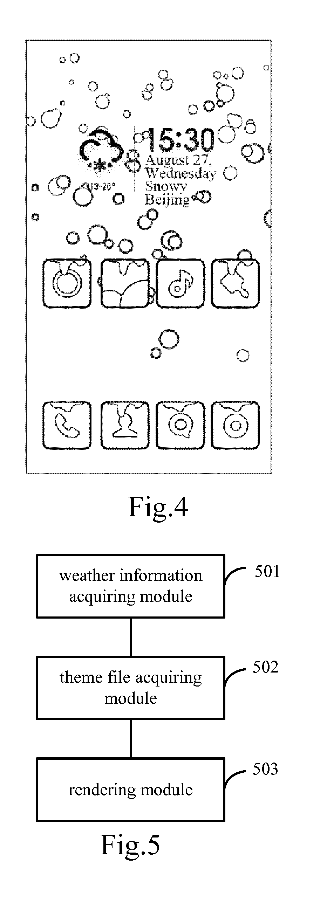

As shown in Fig. 4, when the current weather is a snowy day, an effect of snowing on the desktop is rendered in accordance with the desktop background file, and the terminal renders the icon file in the inactive state onto the desktop, thus an effect that snowflakes fall on the icon of the desktop is rendered, such that a user may intuitively and quickly know current weather information.

It is to be explained that the steps 203 and 204 are processes for rendering according to a theme file corresponding to the weather information, the steps 203 and 204 may be performed in parallel without necessary sequences, which is not particularly defined in the present embodiment.

In step 205, a rendering effect of the icon file in the inactive state is withdrawn, the icon file in the active state is rendered onto the desktop, and an application corresponding to the icon is started, when an instruction to activate an inactive icon is detected.

Specifically, when an instruction to activate an inactive icon is detected, the terminal withdraws a rendering effect of the icon file in the inactive state, selects an icon file in an active state corresponding to the icon to which the instruction corresponds, renders the icon file in the active state onto the icon to which the instruction corresponds, and starts an application corresponding to the icon to which the instruction corresponds.

For example, based on the example in which the snowflakes fall on the icon in the step 204, when an instruction to activate the icon is detected, the terminal withdraws the rendering performed according to the icon file in the inactive state, acquires the icon file in the active state corresponding to the icon from the theme file, and renders the icon file in the active state onto the icon, for the snowy day, the icon file in the active state may only be the initial display effect of the icon, thus it may show an effect that the snowflakes disappear due to operations such as a user's click; of course, the icon file in the active state may also be a dynamic effect, for example, an effect that the snowflakes shake off and gradually disappear. After rendering, an application corresponding to the icon to which the instruction corresponds is started, such that the user feels that he is personally on the scene of the snowy day, thereby to own better feelings.

In step 206, the rendering effect of the icon file in the inactive state is withdrawn, and the icon file of the present operation is rendered onto the desktop, when the preset operation is detected.

Specifically, when the preset operation of the terminal is detected, for example, when the operation of shaking, the operation of double-clicking a blank area on a screen or the operation of blowing of the terminal is detected, the terminal withdraws the rendering effect of the icon file in the inactive state, and renders the icon file of the preset operation onto the desktop.

In fact, the icon file corresponding to the preset operation may have effects similar to effects showed by the icon file in the active state, but the preset operation may be a preset operation for a plurality of icons. For example, if current weather is a snowy day, the plurality of icons on the desktop are displayed to have snowflakes, when the operation of shaking of the terminal is detected, the terminal withdraws the rendering effect on the desktop by the icon file in the inactive state, the icon file of the preset operation is rendered on the desktop, thus showing the effect that the snowflakes on the icons of the desktop disappear.

Further, the theme file may also include a desktop background file corresponding to the preset operation, that is, when the preset operation is detected, not only the icon is re-rendered, but also the desktop background is re-rendered, for example, for the effect that the snowflakes fall on the icon, when the operation of shaking of the terminal is detected, the terminal withdraws the rendering effect of the icon file in the inactive state onto the desktop, the icon file of the preset operation is rendered onto the desktop, thus rendering the effect that the snowflakes on the icons of the desktop shake off and gradually disappear, and the desktop background renders an effect that the snowflakes fall or fly up from the icons.

In the method provided by the embodiment of the present disclosure, by acquiring a theme file corresponding to the current weather information, and rendering the acquired theme file onto a desktop, a desktop background and a display effect of an icon on the desktop may correspond to the current weather information, thereby a user may intuitively and quickly know the current weather information without carefully viewing text information.

Fig. 5 is a block diagram of a device for displaying a desktop provided by the embodiment of the present disclosure. Referring to Fig. 5, the device includes a weather information acquiring module 501, a theme file acquiring module 502 and a rendering module 503.

The weather information acquiring module 501 is configured to acquire current weather information; the weather information acquiring module 501 is connected with the theme file acquiring module 502, the theme file acquiring module 502 is configured to acquire a theme file corresponding to the current weather information from a pre-downloaded theme package, according to the acquired current weather information, the theme file includes at least a desktop background file and an icon file; the theme file acquiring module 502 is connected with the rendering module 503, and the rendering module 503 is configured to render the desktop background file and the icon file onto a desktop.

In one embodiment, the weather information acquiring module 501 includes a first weather information acquisition submodule configured to acquire, according to a geographical location preset by the terminal, weather information corresponding to the geographical location; or, a second weather information acquisition submodule configured to acquire, according to a geographical location where the terminal is currently located, weather information corresponding to the geographical location.

In one embodiment, the desktop background file includes a plurality of resources and moving trajectories and display resources of the resources, and the rendering module 503 is configured to render the desktop of the terminal in accordance with the plurality of resources and the moving trajectories and the display resources of the resources, such that the resources represent the display effects and move according to the moving trajectories on the desktop.

In one embodiment, the icon file includes an icon file in an inactive state and an icon file in an active state, and the rendering module 503 comprises: an inactive state rendering submodule configured to render the icon file in the inactive state onto the desktop, when the icon is in an inactive state; or, an active state rendering submodule configured to withdraw a rendering effect of the icon file in the inactive state, render the icon file in the inactive state onto the desktop, and start an application corresponding to the icon, when an instruction to activate an inactive icon is detected.

In one embodiment, the icon file further includes an icon file of a preset operation, and the rendering module 503 is also configured to withdraw the rendering effect of the icon file in the inactive state, and render the icon file of the preset operation onto the desktop, when the preset operation is detected.

In one embodiment, the preset operation is an operation of shaking, an operation of double-clicking a blank area on a screen or an operation of blowing.

In the embodiment of the present disclosure, by acquiring a theme file corresponding to the current weather information, and rendering the acquired theme file onto the desktop, a desktop background and a display effect of an icon on the desktop may correspond to the current weather information, thereby a user may intuitively and quickly know the current weather information without carefully viewing text information.

It is to be explained that when the device for displaying a desktop provided by the above embodiments displays on a desktop, the division of the modules with functions as above is described only for illustration, and in actual applications, the above functions may be implemented by different modules as needed. That is, the internal structure of the device is divided into different modules, to realize all or a part of the above-described functions. In addition, the device for displaying a desktop provided by the above embodiments belongs to the same inventive concept as that of the method for displaying a desktop, and the specific implementing processes thereof may be found in the embodiments of the method, which are not described repeatedly.

Those skilled in the art could understand, the whole or a part of the steps in the above embodiments may be achieved by hardware, or may be achieved by a program instructing the relevant hardware. The program may be stored in a computer readable storage medium, and the storage medium may be a read only memory, a magnetic disk or an optical disk, etc.

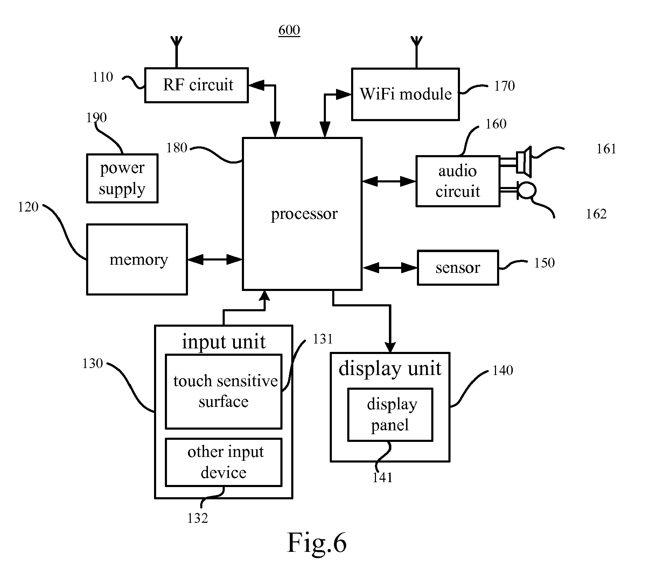

Fig. 6 is a block diagram of a terminal device provided by an embodiment of the present disclosure. The terminal device may be used for implementing the method for displaying a desktop provided in the above embodiments.

The terminal 600 may include: a RF (Radio Frequency) circuit 110, a memory 120 including one or more computer readable storage media, an input unit 130, a display unit 140, a sensor 150, an audio circuit 160, a WIFI (Wireless Fidelity) module170, a processor 180 comprising one or more processing cores, and a power supply 190 and the like. Those skilled in the art may understand that the structure of the terminal device as shown in this figure is not restrictive to the terminal device, and it may comprise more or less components than those in the figure, or a combination of some components, or different component arrangements.

The RF circuit 110 may be configured to send and receive signals during sending and receiving of information or a process of calling. In particular, the RF circuit 110 receives downlink information from a base station and then transmits the information to the one or more processors 180 to be processed, and transmits the related uplink data to the base station. Generally, the RF circuit 110 includes, but is not limited to, an antenna, at least one amplifier, a tuner, one or more oscillators, a Subscriber Identity Module (SIM) card, a transceiver, a coupler, a Low Noise Amplifier (LNA), a duplexer and the like. Additionally, the RF circuit 110 may also communicate with a network or other devices via a wireless network. The wireless communication may adopt any one of communication standard or protocol including, but not limited to, Global System of Mobile communication (GSM), General Packet Radio Service (GPRS,) Code Division Multiple Access (CDMA), Wideband Code Division Multiple Access (WCDMA), Long Term Evolution (LTE), email, Short Messaging Service (SMS) and the like.

The memory 120 may be configured to store software programs and modules, which allow various types of functional applications and data processes to be performed when executed by the processor 180. The memory 120 may mainly include a program storage area and a data storage area. Wherein the program storage area may store an operating system, applications required by at least one function (such as voice play function, image play function and the like). The data storage area may store data (such as video data, phonebook data, and the like) created by the use of the terminal 600. Besides, the memory 120 may include a high speed random access memory. The memory 120 may also include a nonvolatile memory (NVM), such as at least a magnetic disk storage device, flash memory or other nonvolatile solid-state storage devices. Correspondingly, the memory 120 may also include a memory controller to control access to the memory 120 performed by the processor 180 and the input unit 130.

The input unit 130 may be configured to receive input numerical or character information and generate signal inputs through a keypad, a mouse, an operation rod, optical or trackball related to user settings and function control. For example, the input unit 130 may include a touch sensitive surface 131 and other input device 132. The touch sensitive surface 131, or a touch display screen or a track pad, may collect touch operation on or near it by the user (for example the user operations on or near the touch sensitive surface 131 with any kind of suitable objects or attachments such as the finger, touch pen, and the like), and drive the corresponding connection device according to a preset program. Optionally, the touch sensitive surface 131 may include two parts, i.e., a touch detecting device and a touch controller. The touch detecting device may detect the touch orientation of the user, and detect the signal caused by the touch operation, and then transmit the signal to the touch controller. The touch controller may receive the touch information from the touch detecting device and convert it into touch point coordinates and then transmit the coordinates to the processor 180 and may receive the command sent from the processor 180 to execute it. Additionally, the touch sensitive surface 131 may be realized with various types such as resistive, capacitive, infrared, or surface acoustic wave and the like. The input unit 130 may also include other kind of input device 132 besides the touch sensitive surface 131. For example, the other input device 132 may include, without limitation, one or more of a physical keypad, functional buttons (such as volume control button, switch button and the like), a trackball, a mouse, an operating rod and the like.

The display unit 140 may be configured to display various kinds of graphic user interfaces of information input by the user or provided to the user or the mobile terminal 600. These graphic user interfaces may be made up of graphics, texts, icons, videos and any other combination thereof. The display unit 140 may include a display panel 141, optionally, LCD (Liquid Crystal Display), OLED (Organic Light-Emitting Diode) or the like to assemble the display panel 141. Furthermore, the touch sensitive surface 131 may be configured to cover the display panel 141. When detecting the touch operation performed on or near the touch sensitive surface 131, the touch sensitive surface 131 may transmit signals to the processor 180 to determine the type of the touch event, then the processor 180 may provide a corresponding visual output on the display panel 141 according to the type of the touch event. Although in Fig. 6, the touch sensitive surface 131 and the display panel 141 are realizing the input and output functions as two independent components, they may be integrated together in some embodiment to realize the input and output functions.

The terminal 600 may also include at least one sensor 150 such as a photo sensor, a motion sensor and other sensors. For example, the photo sensor may include an ambient light sensor and a proximity sensor. The ambient light sensor may adjust brightness of the display panel 141 according to intensity of the ambient light. The proximity sensor may close the display panel and/or backlight when the terminal 600 is close to the user's ear. As one type of motion sensors, a gravitational acceleration sensor may detect values of accelerations in various directions (usually three axes); may detect a value and a direction of the gravitation when resting; and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a humidometer, a thermometer, an infrared sensor and the like which may be arranged in the terminal 600 will not be described in detailed.

The audio circuit 160, a speaker 161, a microphone 162 may provide an audio interface between the user and the terminal 600. The audio circuit 160 may convert the received audio data into electronic signals and transmit the electronic signals to the speaker 161, and the speaker 161 may convert the electronic signals into voice and output the voice. Additionally, the microphone 162 may convert the collected voice signals into electronic signals; the audio circuit 160 receives the electronic signals and converts them into audio data; and the audio data is transmitted to the processor 180 and then is transmitted to another terminal device via the RF circuit 110 after processed by the processor; or the audio data is transmitted to the memory 120 to be further processed. The audio circuit 160 may also include an earplug jack to allow communication between a peripheral earphone and the terminal 600.

WIFI is a short-range wireless transmission technology. The terminal 600 may help the user transmit or receive E-mail, browse web pages and access streaming media and the like through the WIFI module 170 which provides the user the wireless broadband internet access. Although the WIFI module170 is shown in Fig. 6, it should be understood that the WIFI module170 is not a necessary component of the terminal 600, and may be omitted according to requirements.

The processor 180 is a control center of the terminal 600 using various interfaces and wires to connect respective portions of the whole mobile phone. By running or executing software programs and/or modules stored in the memory 120, calling data stored in the memory 120, and executing various functions of the terminal 600 and processing data, the processor 180 proceeds overall monitoring to the mobile phone. Optionally, the processor 180 may include one or more processing cores. Optionally, the processor 180 may integrate application processors and modem processors, wherein the application processors may mainly process the operation systems, the user interfaces, the application programs and the like, and the modem processors may mainly process wireless communications. It should be understood that the above modem processors may not be integrated into the processor 180.

The terminal 600 may also include the power supply 190 (for example, a battery) to supply power to respective components. Preferably, the power supply may be logically connected with the processor 180 through a power supply management system, thereby realizing functions of managing charging, discharging and power consumption, through the power supply management system. The power supply 190 may further include arbitrary components such as one or more DC or AC power supplies, a rechargeable system, a power supply malfunction detection circuit, a power supply converter or an inverter, a power supply state indicator and the like.

Although not shown, the terminal 600 may also include a camera, a Bluetooth module, which will not described in detail. Specifically, in the present embodiment, a display unit of the terminal device is a touch screen display, and the terminal device further includes a memory and one or more programs stored in the memory, wherein the one or more programs are configured to be executed by one or more processors, and include instructions of performing operations to:
acquire current weather information;
acquire a theme file corresponding to the current weather information from a pre-downloaded theme package, according to the acquired current weather information, the theme file including at least a desktop background file and an icon file; and
render the desktop background file and the icon file onto a desktop of the terminal.

In one embodiment, the one or more programs include instructions for performing operations to:
acquire, according to a geographical position preset by the terminal, weather information corresponding to the geographical position; or,
acquire, according to a geographical position where the terminal is currently located, weather information corresponding to the geographical position.

In one embodiment, the one or more programs include instructions for performing operations of: rendering the desktop of the terminal, in accordance with the plurality of resources and the moving trajectories and the display effects of the resources, such that the resources represent the display effects and move according to the moving trajectories on the desktop.

In one embodiment, the one or more programs include instructions for performing operations of:
rendering the icon file in the inactive state onto the desktop, when the icon is in an inactive state; or,
withdrawing a rendering effect of the icon file in the inactive state, render the icon file in the active state onto the desktop, and starting an application corresponding to the icon when an instruction to activate an inactive icon is detected.

In one embodiment, the one or more programs include instructions for performing operations of:
withdrawing the rendering effect of the icon file in the inactive state, and rendering the icon file of the preset operation onto the desktop, when the preset operation is detected.

In one embodiment, the preset operation is an operation of shaking, an operation of double-clicking a blank area on a screen or an operation of blowing.

In an exemplary embodiment, there is provided a program product having stored therein instructions that, when executed by one or more processors of the terminal apparatus as above, causes the terminal apparatus to perform:
acquire current weather information;
acquire a theme file corresponding to the current weather information from a pre-downloaded theme package, according to the acquired current weather information, the theme file comprising at least a desktop background file and an icon file; and
render the desktop background file and the icon file onto a desktop of the terminal.

In the embodiments of the present disclosure, by acquiring a theme file corresponding to the current weather information, rendering the acquired theme file onto the desktop, a desktop background and a display effect of an icon on the desktop may correspond to the current weather information, a user may intuitively and quickly know the current weather information without carefully viewing text information.

## Claims

1. A computer-implemented method for displaying a desktop, **characterized in that** the method comprises:
acquiring (101) current weather information;
acquiring (102) a theme file corresponding to the current weather information from a pre-downloaded theme package, according to the acquired current weather information, the theme file comprising at least a desktop background file and an icon file; and
rendering (103) the desktop background file and the icon file onto a desktop of a terminal.

2. The method according to claim 1, wherein the step of acquiring the current weather information comprises:
acquiring, according to a geographical location preset by the terminal, weather information corresponding to the geographical location; or,
acquiring, according to a geographical location where the terminal is currently located, weather information corresponding to the geographical location.

3. The method according to claim 1, wherein the desktop background file comprises a plurality of resources and moving trajectories and display effects of the resources, and the step of rendering (103) the desktop background file and the icon file onto the desktop comprises:
rendering (203) the desktop of the terminal, in accordance with the plurality of resources and the moving trajectories and the display effects of the resources, such that the resources represent the display effects and move according to the moving trajectories on the desktop.

4. The method according to claim 3, wherein the icon file comprises an icon file in an inactive state and an icon file in an active state, and the step of rendering (103) the desktop background file and the icon file onto the desktop comprises:
rendering (204) the icon file in the inactive state onto the desktop, when the icon is in an inactive state; or,
withdrawing (205) a rendering effect of the icon file in the inactive state, rendering the icon file in the active state onto the desktop, and starting an application corresponding to the icon, when an instruction to activate an inactive icon is detected.

5. The method according to claim 4, wherein the icon file further comprises an icon file of a preset operation, and the step of rendering (103) the desktop background file and the icon file onto the desktop comprises:
withdrawing (206) the rendering effect of the icon file in the inactive state, and rendering the icon file of the preset operation onto the desktop, when the preset operation is detected.

6. The method according to claim 5, wherein the preset operation is an operation of shaking, an operation of double-clicking a blank area on a screen or an operation of blowing.

7. A device for displaying a desktop, **characterized in that** the device comprises:
a weather information acquiring module (501) configured to acquire current weather information;
a theme file acquiring module (502) configured to acquire a theme file corresponding to the current weather information from a pre-downloaded subject package, according to the acquired current weather information, the theme file comprising at least a desktop background file and an icon file; and
a rendering module (503) configured to render the desktop background file and the icon file onto the desktop of a terminal.

8. The device according to claim 7, wherein the weather information acquiring module (501) comprises:
a first weather information acquisition submodule configured to acquire, according to a geographical location preset by the terminal, weather information corresponding to the geographical location; or,
a second weather information acquisition submodule configured to acquire, according to a geographical location where the terminal is currently located, weather information corresponding to the geographical location.

9. The device according to claim 7, wherein the desktop background file comprises a plurality of resources and moving trajectories and display resources of the resources, and the rendering module is configured to render the desktop of the terminal, in accordance with the resources and the moving trajectories and the display resources of the resources, such that the resources represent the display effects and move according to the moving trajectories on the desktop.

10. The device according to claim 9, wherein the icon file comprises an icon file in an inactive state and an icon file in an active state, and the rendering module (503) comprises:
an inactive state rendering submodule configured to render the icon file in the inactive state onto the desktop, when the icon is in an inactive state; or,
an active state rendering submodule configured to withdraw a rendering effect of the icon file in the inactive state, render the icon file in the active state onto the desktop, and start an application corresponding to the icon, when an instruction to activate an inactive icon is detected.

11. The device according to claim 10, wherein the icon file further comprises an icon file of a preset operation, and the rendering module (503) is also configured to withdraw the rendering effect of the icon file in the inactive state, and render the icon file of the preset operation onto the desktop, when the preset operation is detected.

12. The device according to claim 11, wherein the preset operation is an operation of shaking, an operation of double-clicking a blank area on a screen or an operation of blowing.

13. A terminal (600), **characterized in that** the terminal comprises a memory (120), a processor (180), a display (140) and one or more programs, wherein the one or more programs are stored in the memory and are configured to be executed by one or more processors, the one or more programs comprise instructions for performing operations to:
acquire current weather information;
acquire a theme file corresponding to the current weather information from a pre-downloaded theme package, according to the acquired current weather information, the theme file comprising at least a desktop background file and an icon file; and
render the desktop background file and the icon file onto a desktop of the terminal.

14. A program product having stored therein instructions, **characterized in that**, when executed by one or more processors of the terminal according to claim 13, causes the terminal to perform:
acquire (101) current weather information;
acquire (102) a theme file corresponding to the current weather information from a pre-downloaded theme package, according to the acquired current weather information, the theme file comprising at least a desktop background file and an icon file; and
render (103) the desktop background file and the icon file onto a desktop of the terminal.

15. A computer program which when executing on a processor, performs the method according to any one of claims 1 to 6.
